# EUROPEAN PATENT APPLICATION

(11) **EP 3 093 812 A1**
(43) Date of publication of application: **16.11.2016**
(21) Application number: 16169914.5
(22) Date of filing: 17.05.2016
(51) Int. Cl.: G06Q 10/08

(54) **SYSTEM AND METHOD FOR LOADING CARGO ITEM**

(30) Priority: 14.05.2015 KR 20150067300
(71) Applicant: Electronics and Telecommunications Research Institute, Daejeon 34129 (KR)
(72) Inventor: Choi, Yong Hoon, 34061 Daejeon (KR); Shin, Sang Hoon, 35274 Daejeon (KR); Han, Gee Pyeong, 35355 Daejeon (KR)
(74) Representative: Betten & Resch

(57) **Abstract**

A system for loading a cargo item includes a cargo compartment into which a cargo item is loaded, a cargo information recognition device which recognizes information on the cargo item, a cargo compartment controller which loads the cargo item into the cargo compartment, and an administration and management server which receives the cargo information acquired by the cargo information recognition device, determines a position of the cargo item in the cargo compartment based on the cargo information, and instructs the cargo compartment controller to load the cargo item at the position according to the determination.

A method of loading a cargo item includes recognizing information on a cargo item, determining a loading position of the cargo item according to the information, and loading the cargo item into a preset zone according to the loading position.

## Description

### CROSS-REFERENCE TO RELATED APPLICATION

This application claims priority to and the benefit of Korean Patent Application No. 10-2015-0067300, filed on MAY 14, 2015, the disclosure of which is incorporated herein by reference in its entirety.

### BACKGROUND

### 1. Field of the Invention

The present invention relates to a system for loading a cargo item, and more particularly, to a cargo item loading system and method for optimally disposing and managing cargo items in a cargo compartment of a train and so on.

### 2. Discussion of Related Art

Recently, with the advent and prevalence of high-speed trains, the train speed is increasing, and due to being more punctual and safer than other means of transportation, use of trains by passengers and for cargoes is drastically increasing. Also, since the increase in national income and the five-day workweek have resulted in an increase in the number of persons enjoying leisure and tourism, the number of train passengers is increasing, and the number, volume, and weight of the accompanying cargo items are increasing. Therefore, not just in a cargo train, a cargo compartment also is necessary for a passenger train.

However, due to the characteristics of the trains, there are limitations on railroads and number of passenger cars. Therefore, to efficiently use the limited space of a train, a technique for optimizing the disposition of cargo items loaded into the train is needed.

Also, when a passenger moves with his or her cargo, a technique for rapidly loading or unloading the cargo items within a stopover time at each station is needed.

### SUMMARY OF THE INVENTION

The present invention is directed to providing a system and method for efficiently loading cargo items into a limited cargo loading space of a train.

Objects of the present invention are not limited to those mentioned above, and other objects will be apparent to those of ordinary skill in the art from the description below.

According to an aspect of the present invention, there is provided a system for loading a cargo, the system including: a cargo compartment into which a cargo item is loaded; a cargo information recognition device configured to recognize information on the cargo item; a cargo compartment controller configured to load the cargo item into the cargo compartment; and an administration and management server configured to receive the cargo information acquired by the cargo information recognition device, determine a position of the cargo item in the cargo compartment based on the cargo information, and instruct the cargo compartment controller to load the cargo item at the position according to the determination.

According to another aspect of the present invention, there is provided a method of loading a cargo item, the method including: recognizing information on a cargo item; determining a loading position of the cargo item according to the information; and loading the cargo item into a preset zone according to the loading position.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a block diagram of a system for loading a cargo according to an exemplary embodiment of the present invention;
FIG. 2 is a plan view of a cargo compartment according to an exemplary embodiment of the present invention;
FIG. 3 is a perspective view of a unit loading device (ULD) according to an exemplary embodiment of the present invention;
FIG 4 is a perspective view of a loading area in a cargo compartment according to an exemplary embodiment of the present invention;
FIG. 5 is a flowchart of a method of loading a cargo item according to another exemplary embodiment of the present invention;
FIG. 6 is a structural view of a cargo compartment according to an exemplary embodiment of the present invention; and
FIG. 7 is a cross-section view of a cargo compartment according to an exemplary embodiment of the present invention.

### DETAILED DESCRIPTION OF EXEMPLARY EMBODIMENTS

Advantages and features of the present invention and a method of achieving the same will be clearly understood from embodiments described below in detail with reference to the accompanying drawings. However, the present invention is not limited to the following embodiments and may be implemented in various different forms. The embodiments are provided merely for a complete disclosure of the present invention and to fully convey the scope of the invention to those of ordinary skill in the art to which the present invention pertains. The present invention is defined only by the scope of the claims. Meanwhile, the terminology used herein is for the purpose of describing the embodiments and is not intended to be limiting the invention. As used in this specification, the singular form of a word includes the plural unless the context clearly indicates otherwise. The term "comprise" and/or "comprising," when used herein, does not preclude the presence or addition of one or more components, steps, operations, and/or elements other than stated components, steps, operations, and/or elements.

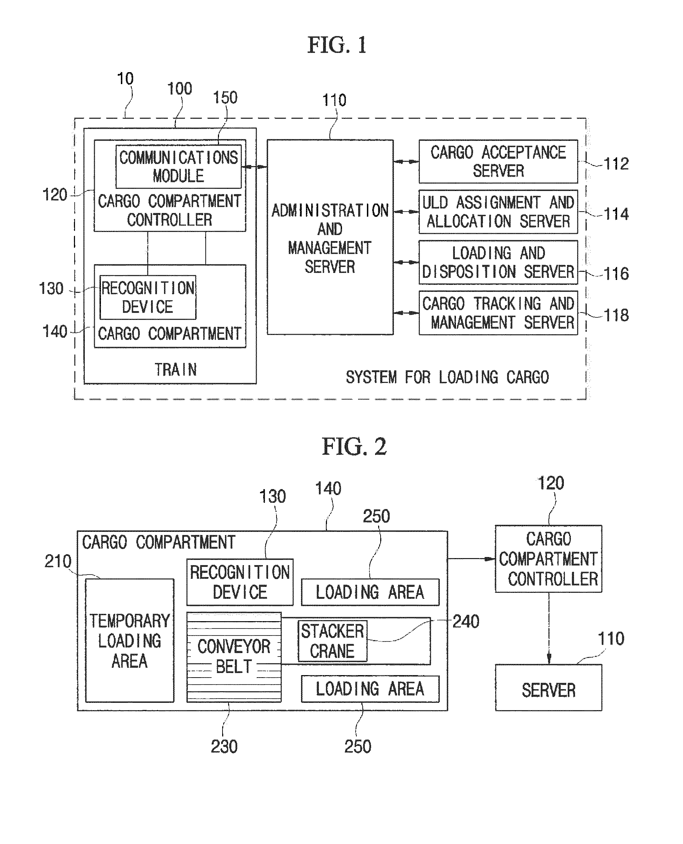

Hereinafter, exemplary embodiments of the present invention will be described in detail with reference to the accompanying drawings. FIG. 1 is a block diagram of a system 10 for loading a cargo item according to an exemplary embodiment of the present invention.

Referring to FIG. 1, the system 10 for loading a cargo item according to an exemplary embodiment of the present invention includes an administration and management server 110, and a cargo compartment controller 120, a cargo information recognition device 130, a cargo compartment 140 having a rack structure, and a communications module 150 in a train 100.

The cargo information recognition device 130 is a device for recognizing information on a cargo item loaded into the cargo compartment 140. Information on a cargo item is stored in the form of a management number before loading and may be attached to the cargo item or a unit loading device (ULD) as an identification tag, such as a sticker in the form of a barcode including the management number, a radio frequency identification (RFID) tag, or so on. The cargo information recognition device 130 is also used as a ULD recognition device.

Various technologies may be used in the cargo information recognition device 130. Besides a general barcode, an RFID tag or an optical character reader (OCR) may be used, and it is possible to obtain additional information on the cargo item using a camera, a scale, or so on.

For example, in addition to detecting the type, destination, etc. of the cargo item using the barcode, the RFID tag, the OCR, etc., when the size, shape, etc. of the cargo item are detected using the camera or the weight of the cargo item is found using the scale, such information may be used for disposing the cargo item.

The cargo compartment controller 120 transmits the information on the cargo item acquired through the cargo information recognition device 130 to the administration and management server 110 and transfers the cargo item temporarily stored in a temporary loading area 210 of the cargo compartment 140 to a loading area 250 with an order of the administration and management server 110. To this end, the cargo compartment controller 120 includes the communications module 150 for communicating with the administration and management server 110 and may use an existing communications network or a dedicated communications network as a communications network for the communication.

Also, the cargo compartment controller 120 can detect the current condition inside the cargo compartment 140, that is, a loading condition and environmental information including temperature, humidity, etc., and frequently transmit the current condition to the administration and management server 110. To prevent a fire, theft, etc., a camera is installed so that the cargo compartment controller 120 can transmit video information of the inside of the cargo compartment 140.

The administration and management server 110 receives from the cargo compartment controller 120 the information acquired through the cargo information recognition device 130, classifies the cargo item, determines positions in the loading area 250 of the cargo compartment 140 at which the cargo item will be loaded, and then transmits the determined position information back to the cargo compartment controller 120.

Alternatively, the administration and management server 110 acquires in advance a result of calculating a position of cargo item in the loading area 250 through an algorithm for loading and disposition upon a determination of the cargo item to be transported, recognizes cargo information when the cargo item is loaded, and then transmit the position of the cargo item to the cargo compartment controller 120 so that the cargo item may be loaded according to the calculation result.

The administration and management server 110 including the algorithm for disposing a cargo item uses destination information by default. For example, for rapid loading and unloading, the cargo item with the farthest destination, that is, unloaded last, is disposed at a position farthest from the entrance of the cargo compartment 140.

The administration and management server 110 may use information including the size, weight, etc., that is, the information additionally acquired by the cargo information recognition device 130, for disposing the cargo item. When items of the cargo having the same destination are grouped, heavy items among them may be disposed at a lower portion of the loading area 250 and light pieces may be disposed in an upper portion of the loading area 250 or large items of the cargo may be disposed at a more inside portion of the loading area 250.

A cargo item is directly loaded into the cargo compartment 140 or is contained in a standardized container referred to as a "ULD" and loaded into the cargo compartment 140. In the case of using a ULD 300, the administration and management server 110 selects a ULD 300 suitable for the size, weight, and shape of the cargo item and redisposes the cargo item in the ULD 300.

The administration and management server 110 serves not only to dispose the cargo item but also to track and manage the cargo item until the cargo item is accepted and transferred to a passenger or the owner. The administration and management server 110 manages the cargo item based on information of a barcode, an RFID tag, etc. attached to the cargo item or the ULD 300.

For stable and efficient task processing, the administration and management server 110 may be configured as a server system having the administration and management server 110 as a main server and including a plurality of servers which assign tasks to a cargo acceptance server 112, a ULD assignment and allocation server 114, a cargo compartment loading and disposition server 116, and a cargo tracking and management server 118.

The cargo acceptance server 112 serves to input the information on the cargo item when the cargo item is accepted, and the ULD assignment and allocation server 114 serves to divide the accepted cargo item into appropriate bundles, classify, and allocate the cargo item to a ULD 300. Then, the cargo compartment loading and disposition server 116 finally determines a position in the cargo compartment 140 at which the ULD 300 or the allocated cargo item will be loaded.

Lastly, the cargo tracking and management server 118 tracks and manages cargo item to be transported from when the cargo item is accepted until the transportation is finished.

As described above, a cargo item is directly recognized or contained in a ULD 300 and recognized by the cargo information recognition device 130, and when a position is determined by the administration and management server 110, the cargo item is finally loaded into the loading area 250 in the cargo compartment 140 by the cargo compartment controller 120.

A structure of the cargo compartment 140 into which a cargo item is loaded will be described in detail below with reference to FIG. 2.

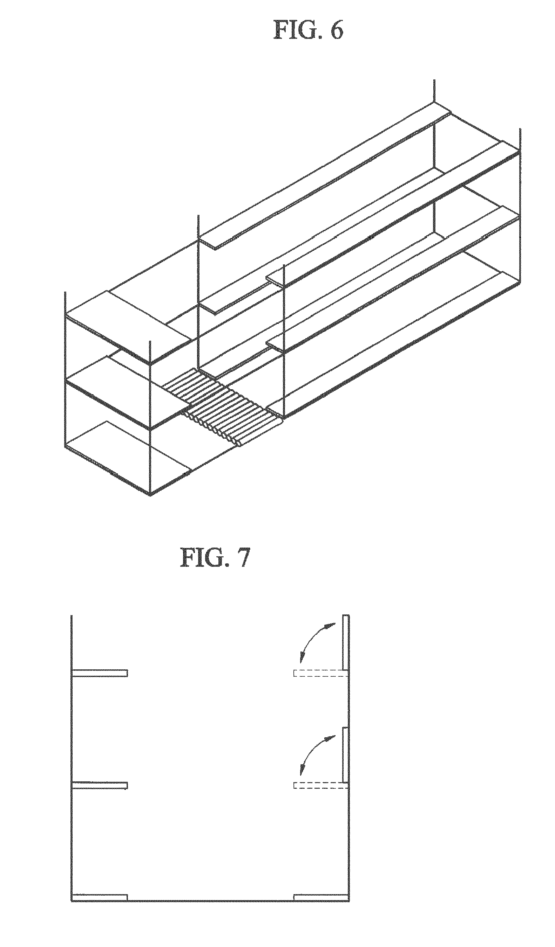

The cargo compartment 140 has the above-described cargo information recognition device 130 installed therein and includes a conveyor belt 230 for conveying a loaded cargo item to the cargo information recognition device 130, the temporary loading area 210 in which the cargo item is temporarily placed before being loaded into the loading area 250, an apparatus including a stacker crane 240, an elevator, etc. for finally loading the cargo item into the loading area 250, and the loading area 250 into which the cargo item is finally loaded. FIG. 6 is a perspective view showing the structure of the cargo compartment 140.

Since loading into the loading area 250 of the cargo compartment 140 is not performed in order of cargo items' arrival, that is, the order of lading, a cargo item is loaded into the temporary loading area 210 and kept in a standby state until the cargo information recognition device 130 recognizes the cargo item and the administration and management server 110 redisposes the cargo item.

When a cargo item is loaded or unloaded, the temporary loading area 210 is temporarily loaded with the cargo item, thereby serving as a buffer. In other words, the temporary loading area 210 enables rapid loading and unloading within a stopover time. There is a buffer mover for moving a cargo item to the loading area 250 beside the temporary loading area 210. In case of need, a loaded cargo item is moved to a loading portion of the temporary loading area 210, moved to the buffer mover after disposition is finished by the administration and management server 110, and finally loaded into the loading area 250.

The temporary loading area 210 is used to minimize a stopover time of a train. When a train is delayed due to the time to dispose a cargo item in the loading area 250, the cargo item may be loaded into the temporary loading area 210 first, and the cargo item in the temporary loading area 210 may be disposed in the loading area 250 while the train is running.

The conveyor belt 230 is an apparatus for moving a cargo item from the entrance to the inner side or vice versa when the cargo item is loaded or unloaded. After the cargo item is moved from the entrance to the inner side, the cargo item is loaded into the temporary loading area 210 or the loading area 250 using an apparatus including the stacker crane 240, an elevator, or so on.

For various uses of the cargo compartment 140, racks are manufactured to be foldable, and the foldable racks enable loading of a cargo item having a special size and a ULD 300. Such control is performed by the cargo compartment controller 120. This configuration can ensure movement of the stacker crane 240 to some degree, and when a tall cargo item is loaded, racks may be folded to make better use of the loading area 250. The foldable structure of racks can be applied not only to the loading area 250 but also to the temporary loading area 210 in the same way.

All such control in the cargo compartment 140 is performed by the cargo compartment controller 120 as instructed by the administration and management server 110. The cargo compartment controller 120 can be placed in the cargo compartment 140 or a space separated from the cargo compartment 140, for example, a locomotive or so on.

The loading area 250, while may be configured a little differently according to the size of the train or whether or not the train is a complex train that is a double decker train on one floor of which a cargo item is loaded, has a rack structure consisting of multiple floors in the vertical direction and multiple columns in the horizontal direction. FIGS. 6 and 7 show such a structure and a cross-section view of the loading area 250.

The loading area 250 may include sensors for sensing a position on a rack at which a cargo item or a ULD 300 has been loaded. Due to these sensors, it is possible to know whether a cargo item or a ULD 300 has been accurately loaded at each position. Also, it is possible to detect an empty space in the loading area 250 and use the empty space for the administration and management server 110 to appropriately dispose other cargo items. To this end, the cargo compartment controller 120 detects whether a cargo item or a ULD 300 has been loaded at a designated position in the loading area 250 using the sensors and transmits the information to the administration and management server 110.

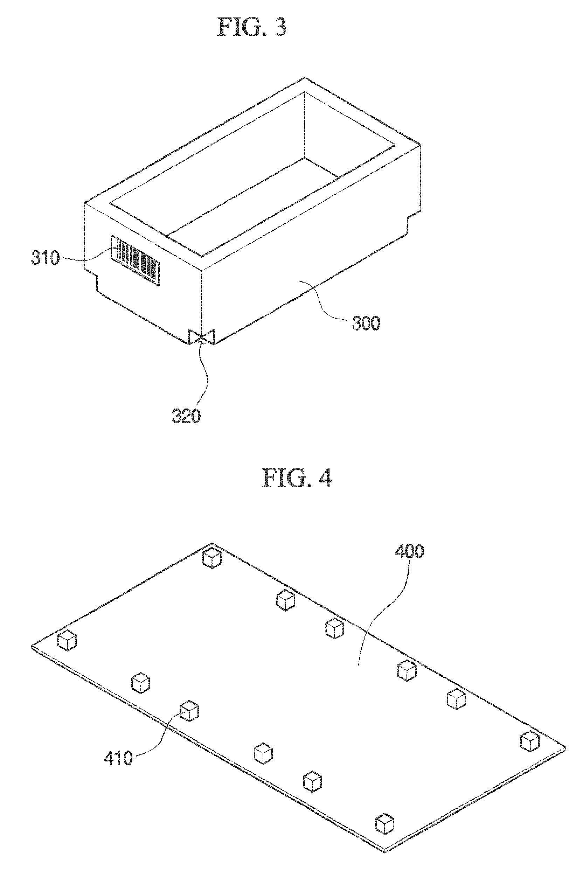

FIGS. 3 and 4 show the structure of a ULD 300 and the structure of a rack 400 when a cargo item is loaded into the cargo compartment 140 using the ULD 300.

As mentioned above, an identification tag 310 may be attached to the ULD 300 and is configured as a barcode, an RFID tag, or so on. The ULD 300 may have fixing grooves 320 at four corners of the bottom to be fixed on a rack of the loading area 250. To engage and fix the ULD 300 with the fixing grooves 320, the rack 400 includes protrusions 410.

When there are the fixing grooves 320 and the protrusions 410, disposition of the ULD 300 is limited. Therefore, a magnet may be installed on one surface of the interface between the ULD 300 and the rack 400, and a magnet of the opposite polarity or a steel plate may be installed on the other surface, so that the ULD 300 can also be fixed with neither the fastening grooves 320 nor the protrusions 410.

With these fixing methods, the ULD 300 can be fixed not to leave the loading area 250 and can be safely transported in spite of shaking of the train. Besides the aforementioned fixing grooves or magnet, various technologies generally used can also be used to fix the ULD 300.

Although FIG 4 shows the structure of the protrusions 410 for disposing ULDs 300 in the length direction in one line on the rack 400, ULDs can also be disposed in the width direction or in two or more rows. To this end, the protrusions 410 on the rack 400 may be disposed in a grid shape. While the tops of protrusions 410 are normally at the same level as the rack 400, only protrusions 410 necessary for fixing a ULD 300 can be protruded to fix the ULD 300.

Meanwhile, when the stacker crane 240 is used to load a cargo item on a multi-layer rack, movement of the ULD 300 on the rack may be limited by protrusions 410. Therefore, protrusions 410 are preferably configured to be movable up down, so that the tops of the protrusions 410 may be at the same level as the rack 400 during a loading process and may protrude to fix the ULD 300 after disposition of the ULD 300 is finished.

According to another exemplary embodiment, a cargo item or ULDs 300 may be put on racks of the loading area 250 from up to down by a general crane (not shown). In this case, when a cargo item is put on the first floor or the second floor, movement of the crane is limited by a second-floor or third-floor rack. Therefore, racks of the loading area 250 may be configured to be folded as shown in FIG. 7 when a cargo item is loaded on a lower rack.

Folding of a rack is controlled by the cargo compartment controller 120. Due to such a configuration, movement of the stacker crane 240 can be ensured to some degree, and when a tall cargo item is loaded, racks are folded to make better use of the loading area 250. The foldable structure of racks can be applied not only to the loading area 250 but also to the temporary loading area 210 in the same way.

By more efficiently disposing a cargo item loaded into the cargo compartment 140 with the elements described above, it is possible to rapidly load or unload a cargo item every time the train stops at a station, and train travel time is reduced accordingly.

A method of loading a cargo item for obtaining such effects will be described below with reference to drawings. A method of directly loading a cargo item is described here, but can also be applied to a case of loading a cargo item using a ULD 300.

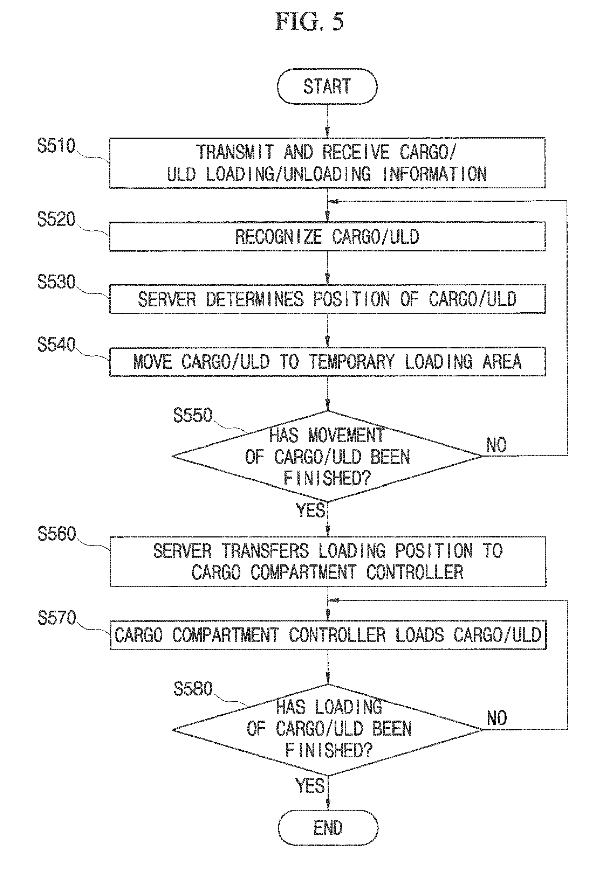

FIG. 5 is a flowchart of a method of loading a cargo item according to an exemplary embodiment of the present invention.

Frist, when a cargo item is prepared, the administration and management server 110 and the cargo compartment controller 120 exchange information indicating that preparation to load the cargo item is finished (S510).

To temporarily load the laden cargo item into the temporary loading area 210, a cargo item in the temporary loading area 210 is moved to the buffer area (not shown).

When a movement to the buffer area is finished and then the cargo item is put on the conveyor belt 230, the cargo item is moved toward the cargo information recognition device 130, and the cargo information recognition device 130 recognizes information on the cargo item (S520). The cargo compartment controller 120 transmits the information on the cargo item to the administration and management server 110. The administration and management server 110 receiving the information on the cargo determines a position of the cargo item in the loading area 250 of the cargo compartment 140 based on the received information on the cargo item (S530).

The cargo compartment controller 120 moves the cargo item of which recognition has been finished to the temporary loading area 210 (S540) and determines whether recognition and movement of all items of a cargo present on the conveyor belt 230 have been finished (S550). When it is determined that recognition and movement of all the items of the cargo have not been finished, the above operations S520, S530, and S540 are repeated.

The operation of determining the position of the a cargo item may be performed based on destination information of the cargo item with reference to the size, shape, weight, etc. of the cargo item by the administration and management server 110 as described above. The destination of the cargo item is the primary information for determining the position. However, when it is necessary to transport items of a cargo together due to their characteristics, including refrigerated or frozen food, cargo items requiring vibrationless transportation, etc., the administration and management server 110 may ignore their destinations and dispose them together in a similar area of the loading area 250. Even in this case, it is self-evident that a disposition sequence in the similar area may be changed according to destination.

After determining the position of the cargo item using the loading and disposition algorithm, the administration and management server 110 transmits the loading position to the cargo compartment controller 120 through a communications network to actually dispose the cargo item into the loading area 250 (S560).

The cargo compartment controller 120 loads the cargo item into the loading area 250 based on the position of the cargo item received from the administration and management server 110 (S570), determines whether all items of the cargo in the temporary loading area 210 have been transferred to the loading area 250 (S580), and repeats the above operation (S570) until loading of the cargo is finished.

In this way, it is possible to efficiently use the limited space of a train and achieve the objective of the present invention, that is, a reduction in loading and unloading time. Besides a train, the present invention can also be applied to various means of transportation having limited loading space.

According to exemplary embodiments of the present invention, limited space can be efficiently used, and thus the number of loaded cargo items can be increased. Also, a cargo item can be automatically recognized and loaded or unloaded, and thus it is possible to rapidly load or unload the cargo item.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A system for loading a cargo item, comprising:
a cargo compartment into which a cargo item is loaded;
a cargo information recognition device configured to recognize information on the cargo item;
a cargo compartment controller configured to load the cargo item into a loading area in the cargo compartment; and
an administration and management server configured to receive the cargo information acquired by the cargo information recognition device, determine a position of the cargo item in the cargo compartment based on the cargo information, and instruct the cargo compartment controller to load the cargo item at the position according to the determination.

2. The system of claim 1, wherein the administration and management server includes:
a cargo acceptance server configured to input the information on the cargo item upon accepting the cargo item;
a unit loading device (ULD) assignment server configured to classify the cargo item and assign the cargo item to a ULD;
a cargo compartment disposition server configured to dispose the ULD or the cargo item in the cargo compartment; and
a cargo tracking and management server configured to track and manage the cargo item from when the cargo item is accepted until transportation of the cargo item is finished.

3. The system of claim 1 or 2, wherein the cargo information recognition device is a radio frequency identification (RFID) reader, an optical character reader (OCR), or a barcode reader.

4. The system of claim 1, 2, or 3, wherein the cargo information recognition device includes a camera module, and
the administration and management server determines the position according to size or shape of the cargo item recognized by the camera module.

5. The system of one of claims 1 to 4, wherein the cargo compartment includes a temporary loading area, and
the cargo compartment controller loads the cargo item into the temporary loading area before loading the cargo item into the loading area.

6. The system of one of claims 1 to 5, wherein the information on the cargo item includes information on a client who has requested transportation of the cargo item and a recipient, and
the administration and management server provides transportation information of the cargo item to the client and the recipient until the transportation of the cargo item is finished.

7. The system of one of claims 1 to 6, further comprising a unit loading device (ULD) for separately loading the cargo item,
wherein the ULD includes a fixing groove to be fixed on the loading area of the cargo compartment, and
the loading area includes protrusions inserted into the fixing groove and preventing movement of the ULD.

8. The system of claim 7, wherein the protrusions are disposed in a grid formation on the loading area, and
only protrusions necessary for fixing the ULD protrude to fix the ULD.

9. The system of one of claims 1 to 8, further comprising a unit loading device (ULD) for separately loading the cargo item,
wherein a magnet is installed on one of a bottom surface of the ULD and a surface of the loading area of the cargo compartment in contact with the ULD, and
a magnet having opposite polarity to polarity of the magnet or a steel plate is installed on the other surface.

10. The system of one of claims 1 to 9, wherein the loading area includes a plurality of foldable racks, and
when the cargo item is loaded on one of the racks, racks higher than the rack on which the cargo item is loaded are folded by the cargo compartment controller.

11. A method of loading a cargo item, comprising:
recognizing information on a cargo item;
determining a loading position of the cargo item according to the information; and
loading the cargo item into a preset zone according to the loading position.

12. The method of claim 11, wherein the information on the cargo item includes destination information, and
the determining of the loading position includes determining the loading position according to the destination information of the cargo item.

13. The method of claim 11 or 12, wherein the recognizing of the information further includes recognizing size, weight, or shape of the cargo item, and
the loading of the cargo item further includes re-determining the loading position according to the size, weight, or shape of the cargo item.
